# EUROPÄISCHE PATENTSCHRIFT

(11) **EP 1 015 257 B1**
(45) Veröffentlichungstag und Bekanntmachung des Hinweises auf die Patenterteilung: **10.09.2003**
(21) Anmeldenummer: 98932178.1
(22) Anmeldetag: 20.06.1998
(51) Int. Cl.: B42F 13/00, B42F 5/00, G11B 33/04

(54) **EINRICHTUNG ZUM UMBLÄTTERBAREN ABLEGEN VON FLACHEN GEGENSTÄNDEN, INSBESONDERE COMPACT-DISCS**
DEVICE FOR STORING FLAT OBJECTS, IN PARTICULAR COMPACT DISKS, IN JACKETS CAPABLE OF BEING FLIPPED THROUGH
DISPOSITIF POUR RANGER DES OBJETS PLATS, NOTAMMENT DES DISQUES COMPACTS, DANS DES POCHETTES POUVANT ETRE FEUILLETEES

(30) Priorität: 31.07.1997 DE 29713671 U
(43) Veröffentlichungstag der Anmeldung: 05.07.2000
(73) Patentinhaber: Deja-Accessoires GmbH, D-51427 Bergisch Gladbach (DE)
(72) Erfinder: DEJA, Günter, D-51491 Overath (DE)
(74) Vertreter: Langmaack, Jürgen, Dipl.-Ing.
(86) Internationale Anmeldenummer: EP9803782
(87) Internationale Veröffentlichungsnummer: WO99006221

(56) Entgegenhaltungen:
- EP-A- 0 439 708
- WO-A-95/09786
- CH-A- 284 427
- GB-A- 222 706
- US-A- 5 186 496

## Beschreibung

Die Entwicklung von mobilen Abspielgeräten macht es wünschenswert, CDs einfach transportieren und auch aufbewahren zu können, so daß man dazu übergegangen ist, hierfür taschenförmige Hüllen aus einem flexiblen Kunststoff zu schaffen, die sehr viel weniger Raum einnehmen, als die bisher üblichen Festkassetten. Während es bei den Festkassetten noch möglich ist, diese auch ohne zusätzliche Halte- oder Aufnahmeeinrichtung aufeinander zu stapeln oder auch wie ein Buch in einem Regal abzustellen, ist diese Aufbewahrungsart bei taschenförmigen Hüllen aus einem flexiblen Kunststoffmaterial praktisch nicht mehr möglich, so daß zum Aufbewahren Einrichtungen erforderlich sind, in denen die Hüllen geordnet ablegbar sind. Der Erfindung liegt daher die Aufgabe zugrunde, eine derartige Einrichtung zu schaffen.

WO95/09786 zeigt taschenförmige Hüllen, in die jeweils eine CD eingeschoben werden kann. Die Hülle weist jeweils an einem Rand eine Leiste aus einem elastischen Material mit zwei in ihrer Kontur abgewinkelten Ausnehmungen auf, so daß die Hülle an zwei parallel laufenden Schienen einer Ablageeinrichtung gehalten und quer zu ihrer Ausrichtung verschoben werden kann . Der Querschnitt der Ausnehmung ist jeweils auf den Querschnitt der Schienen abgestimmt.

Aus US-A-5,186,496 ist ein Fotoalbum bekannt mit einem Vorderdeckel und einem Hinterdeckel, die beide schwenkbar mit einem Rückenteil verbunden sind. Auf seiner Innenseite ist das Rückenteil an beiden freien Kanten mit flachen, querlaufenden Halteelementen versehen, die zur freien Kante hin jeweils eine offene Rille aufweisen. Die Fotos werden auf Einlagen aus steifem Karton angeordnet, die über einen flexiblen Randstreifen mit einer steif-elastischen Einhängeleiste verbunden sind. Die Einhängeleiste weist an ihren Enden hakenförmige Ansätze auf, so daß unter elastischer Verformung der Ansätze die Einlagen in die Rillen der Halteelemente eingehängt werden können.

Mit der Erfindung wird vorgeschlagen eine Einrichtung zum umblätterbaren Ablegen von flachen Gegenständen, insbesondere Compactdiscs, in taschenförmigen Hüllen, wobei jede Hülle an einem Rand einen Trägerstreifen aus einem steifen jedoch elastisch biegsamen Material aufweist, der mit einer an seinem freien Längsrand offenen Ausstanzung versehen ist, die an ihren einander gegenüberliegenden Enden jeweils mit einer in Richtung des Längsrandes verlaufenden Federzunge begrenzt ist und die in wenigstens ein an einem Trägerelement befestigten, als Hohlprofil ausgebildeten Halteelement einhängbar ist, das in Richtung der sich für ein umblättern der Hüllen ergebenden Schwenkachse ausgerichtet ist und das zumindest an seinen beiden Enden jeweils eine in etwa rohrförmige Ausnehmung aufweist, deren Rand in einer Ebene senkrecht zur Achse verläuft und der eine Führung für die Federzungen der eingehängten Hüllen bildet, wobei die Ausstanzung jeweils im Übergangsbereich hinter der Federzunge ein Loch mit Kreiskontur aufweist, das eine seitliche Öffnung zur Ausstanzung aufweist und wobei ferner der Abstand jeweils zwischen der Federzunge und der die Ausstanzung begrenzenden Kante etwa der Dicke des Randes am Halteelement entspricht. Eine derartige Einrichtung hat den Vorteil, daß die Hüllen in der Einrichtung abgelegt werden und auch aus ihr wieder entnommen werden können. Ferner bietet die Einrichtung die Möglichkeit, durch ein Umblättern die gewünschte CD heraussuchen und aus der Hülle entnehmen zu können, ohne daß die Hülle selbst aus der Einrichtung entfernt werden muß. Ein weiterer Vorteil besteht darin, daß sowohl für das Einlegen wie für das Entnehmen der Hüllen keine aufwendige Betätigungsmechanik vorzusehen ist. Daraus ergibt sich dann als weitere Folge, daß das Halteelement einfach herzustellen ist, beispielsweise als Formkörper, der aus Kunststoff gefertigt wird und der dann in beliebiger Weise mit dem Trägerelement verbunden werden kann, beispielsweise durch Kleben, Nieten, Stecken, Schweißen oder dergl., je nach dem für das Trägerelement verwendeten Material. Hierbei können je nach Gestaltung das Trägerelement und das Halteelement aus dem gleichen Material bestehen, ggf. sogar einstückig geformt sein, wie nachstehend für eine Ausgestaltung der Erfindung noch näher dargelegt werden wird, oder aber auch aus zwei Materialien, wie beispielsweise eine feste Kartonage für das Trägerelement und Kunststoff für das Halteelement, die im Wiederaufarbeitungsverfahren ohne weiteres voneinander trennbar sind. Diese Materialwahl bietet sich beispielsweise bei einer buchförmigen Ausgestaltung der Einrichtung an.

In Ausgestaltung der Erfindung ist vorgesehen, daß der Rand der Ausnehmung einen bogenförmigen Verlauf aufweist. Hierdurch ist ein einwandfreies Umblättern gewährleistet, wobei durch die Führung der Hülle über den Rand der Ausnehmung die Hülle selbst und eine etwa darin aufbewahrte CD keinen Verformungskräften unterworfen ist. Statt einem bogenförmigen Verlauf ist auch ein polygonförmiger oder in etwa rechteckförmiger Verlauf zweckmäßig, der neben einem umblättern auch eine gewisse relative Verschiebbarkeit der Hülle am Halteelement ermöglicht.

Zweckmäßig ist es ferner, wenn das Halteelement mit einem Rückenelement zur Befestigung am Trägerelement versehen ist.

Das Trägerelement kann hierbei ein Möbelstück oder auch ein Ständer sein. Beispielsweise bei der Verwendung in Verbindung mit einem Möbelstück können mehrere, aus Halteelement und Rückenelement gebildete Einheiten beispielsweise in einer Schublade montiert werden. Bei der Anordnung an einem Ständer, beispielsweise einem Verkaufsständer, können mehrere Einheiten mit vertikaler Ausrichtung der Schwenkachse nebeneinander und/oder übereinander angeordnet werden. Diese Anordnung kann aber auch entsprechend an oder in Verbindung mit einem Möbelstück vorgesehen werden. Je nach Wahl des Materials für das Trägerelement kann über dieses Rückenelement des Halteelements eine zusätzliche Aussteifung des Trägerelements bewirkt werden.

In einer Ausführungsform der Erfindung ist vorgesehen, daß das Trägerelement Buchform aufweist, mit einem Vorderdeckel, der über ein Rückenteil mit einem Hinterdeckel verbunden ist und das Halteelement am Rückenteil oder am Hinterdeckel befestigt ist. Damit besteht die Möglichkeit, einen Vielzahl von Hüllen zu einem "Buch" zusammenzufassen, das dann entsprechend zur Aufbewahrung in einem Schrank abgestellt werden kann.

In einer anderen Ausgestaltung der Erfindung ist vorgesehen, daß das Trägerelement plattenförmig ausgebildet ist und daß mehrere Halteelemente parallel nebeneinander mit dem Trägerelement verbunden sind. Damit ist die Möglichkeit gegeben, eine ständerartige Einrichtung zu schaffen, die auf einem Tisch oder in einer Schublade abgestellt werden kann, so daß in einem Trägerelement weit über zehn Hüllen ablegbar sind, wobei dann ein bequemes umblättern gegeben ist. Dadurch, daß mehrere Halteelemente auf dem Trägerelement angeordnet sind, ist sichergestellt, daß auch bei sehr vielen nebeneinander angeordneten Hüllen ein definiertes Verschwenken der Hüllen gewährleistet ist und eine Überbeanspruchung der Federzungen an den Hüllen vermieden ist.

Durch die Anordnung des Trägerstreifens erhält die Hülle, die aus einem flexiblen und damit weichen Kunststoff hergestellt werden kann, beispielsweise aus einer Polypropylenfolie, eine Versteifung, durch die eine zuverlässige Verbindung mit dem Halteelement der Einrichtung gewährleistet ist. Durch die aus dem Material des Trägerstreifens ausgestanzten Federzungen ist zugleich sichergestellt, daß die Hülle nach Art einer Schnappverbindung mit dem Halteelement verbunden und wieder von diesem gelöst werden kann. Die Federzungen sind mit ihren freien Enden gegeneinander gerichtet, wenn das Halteelement an seinen beiden Enden jeweils in die entgegengesetzte Richtung offen ist. Es ist aber auch möglich, das Halteelement so auszubilden, daß die durch die rohrförmigen Ausnehmungen gebildeten Öffnungen gegeneinander gerichtet sind. In diesem Fall müssen die Federzungen entsprechend in die entgegengesetzte Richtung weisen.

Dadurch, daß die Ausstanzung jeweils im Übergangsbereich hinter einer Federzunge ein Loch mit Kreiskontur aufweist, das seitlich zur Ausstanzung geöffnet ist, kann der Abstand der bei dieser Ausführungsform vorhandenen beiden Löcher dann so gewählt werden, daß eine derart ausgebildete Hülle sowohl in einer erfindungsgemäßen Einrichtung als auch in einem Ringbuch mit entsprechender Schließmechanik mit genormtem Abstand der Ringe abgelegt werden kann.

Dadurch, daß der Abstand jeweils zwischen der Federzunge und der die Ausstanzung begrenzenden Kante der Dicke des Randes der Ausnehmung am Trägerelement entspricht, ist eine zuverlässige Führung der Hülle am Trägerelement beim Umblättern gewährleistet.

Die Erfindung wird anhand schematischer Zeichnungen von Ausführungsbeispielen näher erläutert. Es zeigen:
- Fig. 1: eine Einrichtung zum Ablegen von CDs in Hüllen in Buchform,
- Fig. 2: einen Schnitt gem. der Linie II-II in Fig. 1, mit hochgestellter Hülle,
- Fig. 3: eine abgewandelte Ausführungsform,
- Fig. 4: eine Einrichtung in Ständerform,
- Fig. 5 und 6: Abwandlungen der Ausführungsform gem. Fig. 4 ebenfalls im Schnitt,
- Fig. 7: eine einstückige Ausführungsform in Form eines Trägers.

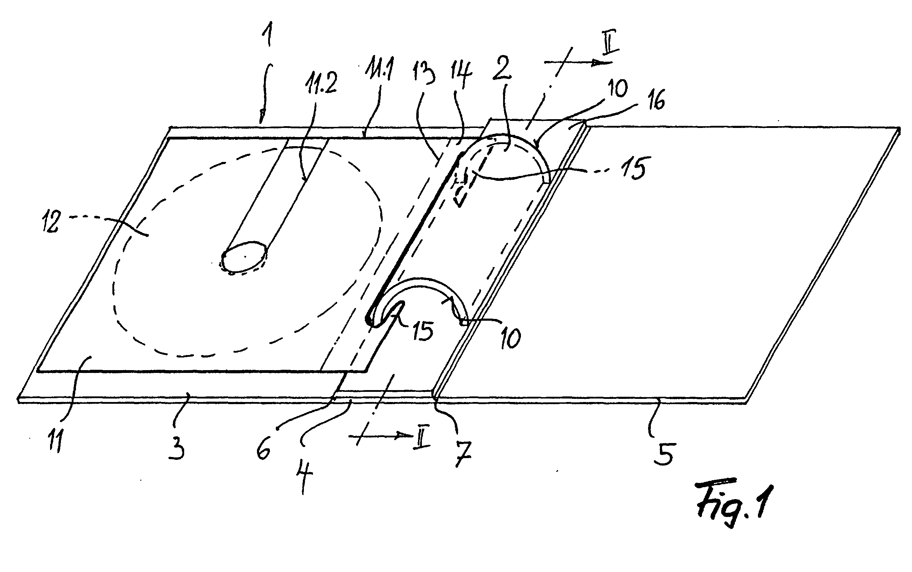

Die in Fig. 1 in einer perspektivischen Ansicht dargestellte Ablageeinrichtung ist nach Art eines Buches ausgeführt und weist als Trägerelement 1 für ein Halteelement 2 einen Vorderdeckel 3 auf, der über ein Rückenteil 4 mit einem Hinterdeckel 5 verbunden ist. Über entsprechende "Gelenke" 6 und 7 sind der Vorderdeckel 3 und der Hinterdeckel 5 entsprechend mit dem Rückenteil 4 verbunden, so daß die beiden Deckel 3 und 5 gegeneinander hochgeklappt werden können.

Das Halteelement 2, das bei dem hier dargestellten Ausführungsbeispiel durch ein Hohlprofil gebildet wird, ist dementsprechend an seinen beiden Enden jeweils mit einer rohrförmigen Ausnehmung versehen, deren Rand 10 senkrecht zur Ebene des Rückenteils 4 verläuft.

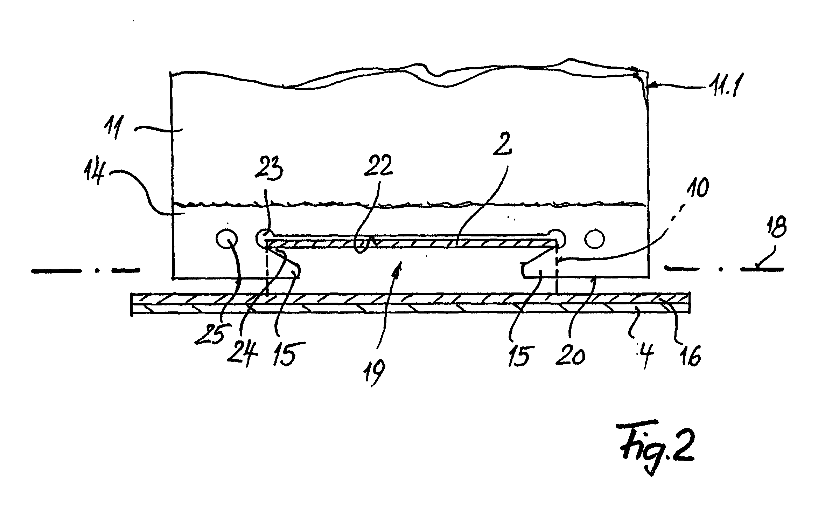

In das Halteelement 2 sind nun mehrere taschenförmige Hüllen 11 einhängbar, von denen nur eine Hülle dargestellt ist. Die taschenförmige Hülle 11, die bei dem hier dargestellten Ausführungsbeispiel zur Aufnahme einer CD 12 dient, ist aus einer Kunststoffolie, beispielsweise einer Polypropylenfolie hergestellt und an einem Längsrand 13 mit einem Trägerstreifen 14 aus einem steifen, jedoch elastisch biegsamen Material versehen, an dem durch eine entsprechende Ausstanzung, die nachstehend noch näher beschrieben werden wird, Federzungen 15 gebildet sind. Die Hülle 11 weist eine Einschuböffnung 11.1 auf, die quer zur Schwenkachse 18 (Fig. 2) angeordnet ist, so daß bei vertikaler Ausrichtung eine eingeschobene CD nicht herausfallen kann. Ein breiter Schlitz 11.2 auf der Vorderseite der Hülle erlaubt das Einschieben eines Fingers bei der Handhabung der CD.

Wie Fig. 1 erkennen läßt, hintergreifen die Federzungen 15 den Rand 10 des Halteelements 2, so daß die Hüllen zum einen formschlüssig am Halteelement 2 gehalten sind, jedoch nach Art eines Buches umgeblättert werden können. Die Hüllen 11 können unter entsprechender Verformung der Federzungen 15 in das Halteelement 2 "eingeklickt" und auch in entsprechender Weise wieder herausgenommen werden.

Das Halteelement 2 ist bei dem hier dargestellten Ausführungsbeispiel als einstückiges Kunststoffteil hergestellt und mit einem Rückenelement 16 versehen, über das das Halteelement 2 am Trägerelement 1 festlegbar ist. Das Rückenelement 16 kann hierbei gleichzeitig zur Aussteifung beispielsweise des Rückenteils 4 des buchförmigen Trägerelements 1 dienen.

Die Schnittdarstellung gem. Fig. 2 zeigt die Einzelheiten der Ausgestaltung des Trägerstreifens 14 an der Hülle 11 und zugleich den Aufbau des Halteelements 2. Gleiche Bauteile sind mit den gleichen Bezugszeichen versehen, so daß insoweit zu Fig. 1 verwiesen werden kann.

Wie aus dem Schnitt in Fig. 2 ersichtlich, ist das Halteelement 2 im wesentlichen rohrförmig ausgebildet, wobei die beiden offenen, eine Ausnehmung bildenden Enden durch einen Rand 10 begrenzt werden, der in einer Ebene senkrecht zur Schwenkachse 18 verläuft, um die die Hülle 11 beim Umblättern verschwenkt werden kann. Das Halteelement 2 ist mit seinem Rükkenelement 16 mit dem Rückenteil 4 des buchförmig zusammenklappbaren Trägerelements 1 fest verbunden, beispielsweise durch Klebung oder Nietung.

Der Trägerstreifen 14 der taschenförmigen Hülle 11 ist mit einer Ausstanzung 19 versehen, die zum freien Längsrand 20 hin offen ist und die an ihren einander gegenüberliegenden Enden jeweils mit der in Richtung des Längsrandes 20 verlaufenden Federzunge 15 versehen ist. Der Zwischenraum zwischen der Federzunge 15 und der die Ausstanzung 19 begrenzenden Kante 22 ist so bemessen, daß sich der Trägerstreifen 14 beim Umblättern auf der Außenfläche des Halteelementes 2 abstützen kann.

Die Ausstanzung 19 ist jeweils im Übergangsbereich hinter den Federzungen 15 mit einem Loch 23 mit Kreiskontur versehen, das eine seitliche Öffnung 24 zur Ausstanzung 19 hin aufweist. Der Durchmesser der beiden Löcher 23 sowie der Abstand der beiden Löcher 23 zueinander ist so bemessen, daß die Hülle 11 auch in einem Ordner mit genormter Ringmechanik abgelegt werden kann. Für Ringmechaniken mit größerem Abstand kann der Trägerstreifen 14 im Endbereich mit zusätzlichen Löchern 25 versehen sein.

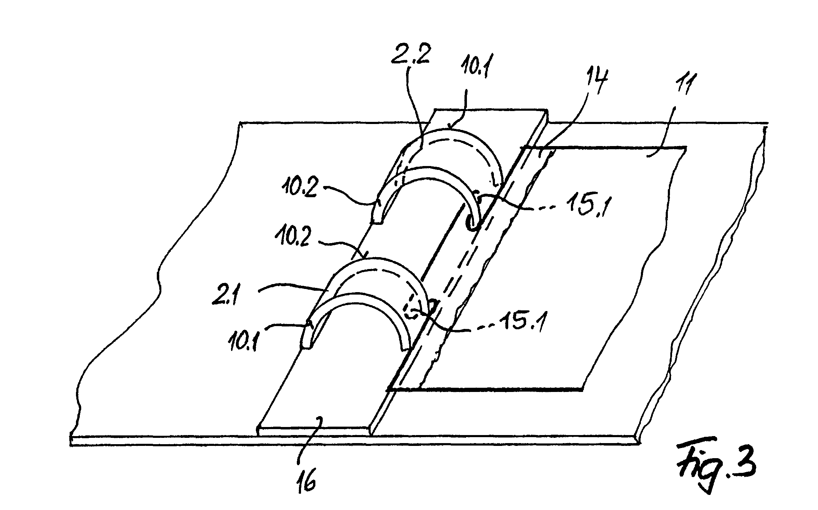

In Fig. 3 ist eine gegenüber Fig. 1 abgewandelte Ausführungsform dargestellt, die auch wieder ein Trägerelement in Buchform aufweist. Auch hier sind gleiche Bauelemente mit den gleichen Bezugszeichen wie die Ausführungsform gem. Fig. 1 versehen, so daß hier auf die vorstehende Beschreibung verwiesen werden kann.

Der Unterschied der Ausführungsform gem. Fig. 3 gegenüber Fig. 1 besteht darin, daß hier auf einem Rückenelement 16 zwei Halteelemente 2.1 und 2.2 mit Abstand zueinander angeordnet sind, die entweder napfförmig oder auch durchgehend rohrförmig ausgebildet sein können. Bei einer durchgehend offenen Ausführungsform können sowohl die nach außen weisenden Ränder 10.1 als auch die nach innen weisenden Ränder 10.2 der beiden Halteelemente als Führungen für eine einzubringende Hülle 11 dienen. Über die Ränder 10.1 kann dann eine Hülle eingehängt werden, wie sie anhand von Fig. 1 und 2 beschrieben wurde.

Es ist aber auch möglich, den Trägerstreifen 14 einer Hülle 11 so auszustanzen, daß jeweils Federzungen 15.1 entstehen, die nach außen weisen, wie dies in Fig. 3 dargestellt ist. In Abwandlung hierzu ist es möglich, eine Ausstanzung vorzunehmen, durch die jeweils zwei gegeneinander gerichtete kürzere Federzungen gebildet werden, so daß sowohl am Halteelement 2.1 als auch am Halteelement 2.2 jeweils zwei Federzungen einrasten können, die jedoch dann auch kürzer ausgebildet werden können. Auch bei dieser Ausführungsform ist es möglich, lochförmige Ausstanzungen 23 vorzusehen, wie sie anhand von Fig. 2 beschrieben worden sind.

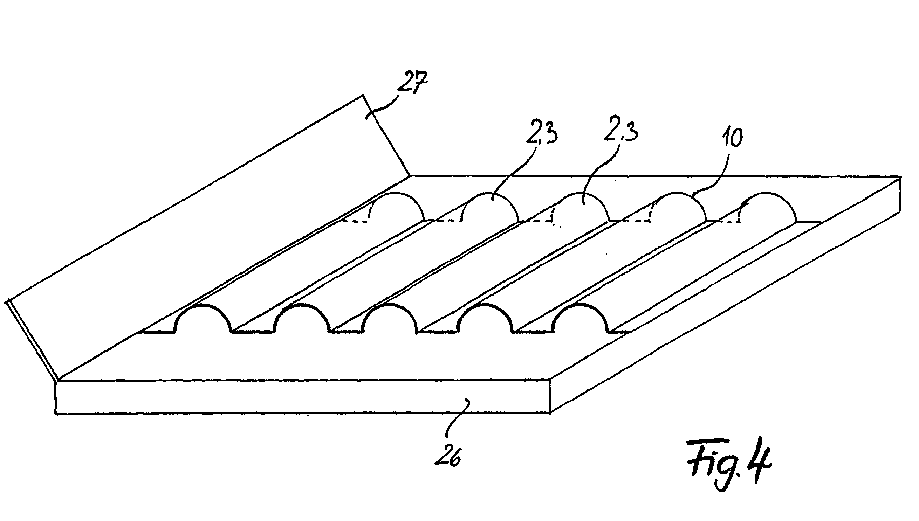

In Fig. 4 ist eine Ausführungsform nach Art eines Ständers dargestellt. Hierbei sind auf einem plattenförmigen Trägerelement 26 mehrere Halteelemente 2.3 parallel dicht nebeneinander oder, wie hier dargestellt, mit Abstand nebeneinander angeordnet, so daß die abzulegenden Hüllen in mehreren "Paketen" in der Einrichtung abgelegt werden können. Das Trägerelement 26 kann an wenigstens einer Seite mit einem Anlageelement 27 versehen sein, an das sich im "Ruhezustand" der Hüllenstapel anlehnen kann.

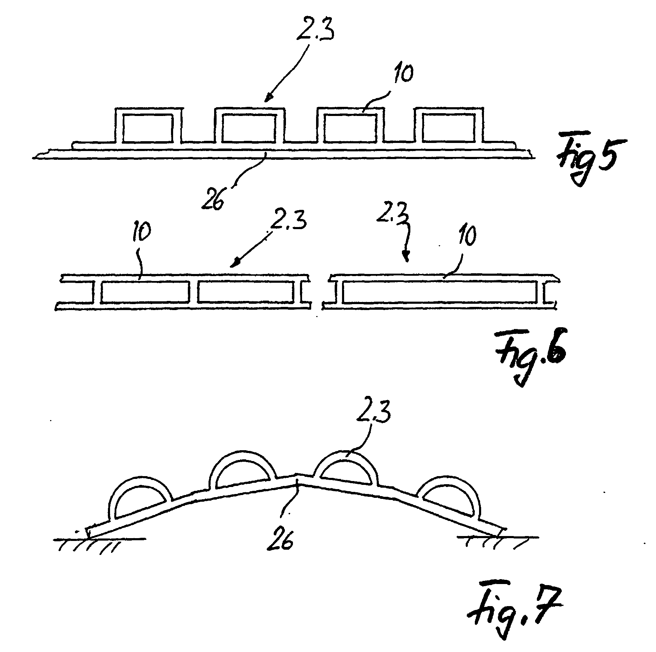

Wie aus den Schnittdarstellungen gem. Fig. 5 und Fig. 6 ersichtlich, ist es nicht zwingend, daß die Halteelemente 2.3 einen halbkreisförmigen oder auch bogenförmigen Verlauf ihrer Querschnittskontur aufweisen. Die Schnittdarstellung gem. Fig. 6 zeigt hier Halteelemente 2.3 mit einer Rechteckkontur.

Während in Fig. 4 und 5 die Halteelemente 2.3 jeweils parallel zueinander und mit Abstand am Trägerelement 26 angeordnet sind, ist es auch möglich, die Rechteckkonturen unmittelbar aufeinanderfolgend vorzusehen, wie es die linke Schnittdarstellung in Fig. 6 zeigt. Es ist auch möglich, hier eine langgestreckte Rechteckkontur zu wählen, die über ihre Gesamtlänge entweder gar nicht oder, wie hier angedeutet, nur einmal unterteilt ist.

In Fig. 7 ist schematisch eine Einrichtung dargestellt, die einstückig aus Kunststoff hergestellt ist, wobei das Trägerelement 26 eine bogenförmige Kontur aufweist und wobei die Halteelemente 2.3 einstückig mit dem Trägerelement verbunden sind.

Auch bei den als Ständer ausgebildeten Einrichtungen, wie sie anhand der Fig. 4 bis 7 beschrieben sind, ist es möglich, sowohl die langgestreckte Version für das Halteelement 2 vorzusehen, wie anhand von Fig. 1 beschrieben, als auch die geteilte Version, wie sie anhand von Fig. 3 beschrieben ist.

## Patentansprüche

1. Einrichtung zum umblätterbaren Ablegen von flachen Gegenständen, insbesondere Compactdiscs, in taschenförmigen Hüllen, wobei jede Hülle (11) an einem Rand (13) einen Trägerstreifen (14) aus einem steifen jedoch elastisch biegsamen Material aufweist, der mit einer an seinem freien Längsrand offenen Ausstanzung (19) versehen ist, die an ihren einander gegenüberliegenden Enden jeweils mit einer in Richtung des Längsrandes verlaufenden Federzunge (15; 15.1) begrenzt ist und die in wenigstens ein an einem Trägerelement (1; 26) befestigten, als Hohlprofil ausgebildeten Halteelement (2; 2.1; 2.2; 2.3) einhängbar ist, das in Richtung der sich für ein Umblättern der Hüllen (11) ergebenden Schwenkachse (18) ausgerichtet ist und das zumindest an seinen beiden Enden jeweils eine in etwa rohrförmige Ausnehmung aufweist, deren Rand (10; 10.1; 10.2) in einer Ebene senkrecht zur Achse (18) verläuft und der eine Führung für die Federzungen der eingehängten Hüllen (11) bildet, wobei die Ausstanzung (19) jeweils im Übergangsbereich hinter der Federzunge (15; 15.1) ein Loch (23) mit Kreiskontur aufweist, das eine seitliche Öffnung (24) zur Ausstanzung (19) aufweist und wobei ferner der Abstand jeweils zwischen der Federzunge (15; 15.1) und der die Ausstanzung (19) begrenzenden Kante (22) etwa der Dicke des Randes (10; 10.1; 10.2) am Halteelement (2; 2.1; 2.2; 2.3) entspricht.

2. Einrichtung nach Anspruch 1, **dadurch gekennzeichnet, daß** der Trägerstreifen (14) jeweils mit seitlichem Abstand zu den Löchern (23) jeweils ein zusätzliches Loch (25) aufweist.

3. Einrichtung nach Anspruch 1, **dadurch gekennzeichnet, daß** der Rand (10; 10.1; 10.2) der Ausnehmung am Halteelement (2; 2.1; 2.2; 2.3) einen bogenförmigen Verlauf aufweist.

4. Einrichtung nach Anspruch 1, **dadurch gekennzeichnet, daß** der Rand (10) der Ausnehmung am Halteelement (2.3) einen in etwa rechteckförmigen Verlauf aufweist.

5. Einrichtung nach einem der Ansprüche 1 bis 4, **dadurch gekennzeichnet, daß** das Halteelement (2; 2.1; 2.2) mit einem Rückenelement (16) zur Befestigung am Trägerelement (1) versehen ist.

6. Einrichtung nach einem der Ansprüche 1 bis 5, **dadurch gekennzeichnet, daß** das Trägerelement (1) Buchform aufweist mit einem Vorderdeckel (3), der über einen Rückenteil (4) mit einem Hinterdeckel (5) verbunden ist, und daß das Halteelement (2; 2.1; 2.2) am Rückenteil (4) oder am Hinterdeckel (5) befestigt ist.

7. Einrichtung nach einem der Ansprüche 1 bis 4, **dadurch gekennzeichnet, daß** das Trägerelement (26) plattenförmig ausgebildet ist und daß mehrere Halteelemente (2.3) parallel nebeneinander mit dem Trägerelement (26) verbunden sind.

## Claims

1. A means for flip-through storage of flat objects, in particular compact discs, in pocket-like sleeves, each sleeve (11) having at one edge (13) a support strip (14) consisting of a stiff but elastically flexible material which is provided with a cutout (19) which is open on its free longitudinal edge, which cutout is delimited on its facing ends in each case by a resilient tongue (15; 15.1) extending in the direction of the longitudinal edge and which can be hooked in at least one holding element (2; 2.1; 2.2; 2.3) fastened to a support element (1; 26) and formed as a hollow profile, which holding element is oriented in the direction of the pivot axis (18) yielded for flipping through the sleeves (11) and which at least at both its ends has in each case one approximately tubular recess, the edge surface (10; 10.1; 10.2) of which extends in a plane at right-angles to the axis (18) and which forms a guide for the resilient tongues of the hooked-in sleeves (11), the cutout (19) in each case having in the region of transition behind the resilient tongue (15; 15.1) a hole (23) of circular contour which has a lateral opening (24) to the cutout (19), and furthermore the distance in each case between the resilient tongue (15; 15.1) and the edge (22) delimiting the cutout (19) corresponding approximately to the thickness of the edge surface (10; 10.1; 10.2) on the holding element (2; 2.1; 2.2; 2.3).

2. A means according to Claim 1, **characterised in that** the support strip (14) in each case has an additional hole (25) in each case at a lateral distance from the holes (23).

3. A means according to Claim 1, **characterised in that** the edge surface (10; 10.1; 10.2) of the recess on the holding element (2; 2.1; 2.2; 2.3) has an arcuate path.

4. A means according to Claim 1, **characterised in that** the edge surface (10) of the recess on the holding element (2.3) has an approximately rectangular path.

5. A means according to one of Claims 1 to 4, **characterised in that** the holding element (2; 2.1; 2.2) is provided with a spine element (16) for fastening to the support element (1).

6. A means according to one of Claims 1 to 5, **characterised in that** the support element (1) is book-shaped with a front cover (3) which is connected via a spine part (4) to a rear cover (5), and that the holding element (2; 2.1; 2.2) is fastened to the spine part (4) or to the rear cover (5).

7. A means according to one of Claims 1 to 4, **characterised in that** the support element (26) is plate-shaped and that a plurality of holding elements (2.3) are connected in parallel to each other with the support element (26).

## Revendications

1. Dispositif pour ranger des objets plats, notamment des disques compacts, dans des pochettes en forme de poche pouvant être feuilletées, chaque pochette (11) présentant sur un bord (13) une bande support (14) en matériau épais mais cependant flexible de manière élastique, munie d'un découpage (19) ouvert sur son bord longitudinal libre, qui est limité sur ses extrémités opposées l'une à l'autre par une languette-ressort respective (15 ; 15.1) s'étendant selon la direction du bord longitudinal, et qui peut être accroché dans au moins un élément de maintien (2 ; 2.1 ; 2.2 ; 2.3) fixé à un élément support (1 ; 26) formé comme profil creux, qui est orienté dans la direction de l'axe de pivotement (18) obtenu pour feuilleter les pochettes (11), et qui présente au moins sur ses deux extrémités un évidement respectif approximativement en forme de tube, dont le bord (10 ; 10.1 ; 10.2) s'étend dans un plan perpendiculairement à l'axe (18) et forme un guidage pour les languettes-ressorts des pochettes (11) accrochées, le découpage (19) présentant à chaque fois dans la zone de passage derrière la languette-ressort (15 ; 15.1) un trou (23) au contour circulaire, qui présente une ouverture (24) latérale vers le découpage (19), et la distance respective entre la languette-ressort (15 ; 15.1) et l'arête (22) limitant le découpage (19) correspondant en outre approximativement à l'épaisseur du bord (10 ; 10.1 ; 10.2) sur l'élément de maintien (2 ; 2.1 ; 2.2 ; 2.3).

2. Dispositif selon la revendication 1, **caractérisé en ce que** la bande support (14) présente à chaque fois un trou supplémentaire (25) à distance latérale par rapport aux trous (23).

3. Dispositif selon la revendication 1, **caractérisé en ce que** le bord (10, 10.1, 10.2) de l'évidement sur l'élément de maintien (2, 2.1, 2.2, 2.3) présente une allure en forme d'arc.

4. Dispositif selon la revendication 1, **caractérisé en ce que** le bord (10) de l'évidement sur l'élément de maintien (2.3) présente une allure de forme sensiblement rectangulaire.

5. Dispositif selon l'une quelconque des revendications 1 à 4, **caractérisé en ce que** l'élément de maintien (2 ; 2.1 ; 2.2) est muni d'un élément de dos (16) pour la fixation sur l'élément support (1).

6. Dispositif selon l'une quelconque des revendications 1 à 5, **caractérisé en ce que** l'élément support (1) présente une forme de livre avec une couverture avant (3), raccordée à une couverture arrière (5) par l'intermédiaire d'une pièce de dos (4), et **en ce que** l'élément de maintien (2 ; 2.1 ; 2.2) est fixé sur la pièce de dos (4) ou sur la couverture arrière (5).

7. Dispositif selon l'une quelconque des revendications 1 à 4, **caractérisé en ce que** l'élément support (26) est formé comme une plaque et **en ce que** plusieurs éléments de maintien (2.3) sont raccordés parallèlement l'un à côté de l'autre à l'élément support (26).
